# EUROPEAN PATENT SPECIFICATION

(11) **EP 0 477 827 B1**
(45) Date of publication and mention of the grant of the patent: **09.08.1995**
(21) Application number: 91116163.6
(22) Date of filing: 23.09.1991
(51) Int. Cl.: A23L 1/24, A23L 1/308, A23L 1/0534, A23L 1/0522

(54) **A low fat mayonnaise product and method for making the same**
Mayonnaise mit niedrigem Fettgehalt und Verfahren zur Herstellung
Mayonnaise à faible teneur en graisse et son procédé de préparation

(30) Priority: 25.09.1990 US 587887; 04.09.1991 US 682829
(43) Date of publication of application: 01.04.1992
(73) Proprietor: CPC INTERNATIONAL INC., Englewood Cliffs New Jersey 07632-9976 (US)
(72) Inventor: Meiners, Mary D., Piscataway, New Jersey 08854 (US); Merolla, Thomas V., Millburn, New Jersey 07041 (US); Smagula, Michael S., Plainsboro, New Jersey 08536 (US); Bernardini, Deborah Louise, Mahopac, New York 10541 (US); Harkabus, Ellen M., Union, New Jersey 07083 (US)
(74) Representative: Lederer, Franz, Dr.

(56) References cited:
- EP-A- 0 301 440
- EP-A- 0 340 035
- EP-A- 0 380 225
- US-A- 2 944 906
- US-A- 3 023 104
- US-A- 4 431 681

## Description

Mayonnaise is a thick, emulsified food dressing generally prepared from vegetable oil, water, egg yolk-containing materials and acidifying ingredients. The United States Food and Drug Administration (USFDA) regulations set forth the standards which a mayonnaise product must meet, including a requirement of at least 65% by weight vegetable oil. However, over the past few years, numerous products have come out on the market expanding the scope of products recognized by the general public as mayonnaise products. Such products include mayonnaise products designated as cholesterol-free and low calorie or light mayonnaise and salad dressings. These mayonnaise products contain levels of oil and egg yolk-containing materials which do not meet the current Standard of Identity for mayonnaise as promulgated by the USFDA. These products may also contain additional ingredients, such as cooked starch paste as a thickening agent, which are not currently recognized as standard ingredients for mayonnaise. In this application, the term "mayonnaise product" is not meant to be limited to those products which meet the current USFDA Standard of Identity, but is meant to encompass all spoonable dressing products which are recognized by the general public as mayonnaise or spoonable salad dressing products.

In today's health conscious environment, there is a need for low or no fat mayonnaise products. A problem to overcome in order to produce no fat mayonnaise products is the removal of the vegetable oil from the products, while maintaining similar product taste and texture. As the oil is present in levels of at least 65% by weight in conventional mayonnaise products and about 30 to 60% by weight in light or low calorie products, substantial reformulation is necessary in order to produce a mayonnaise product with less than 5% by weight vegetable oil.

### DESCRIPTION OF RELATED ART

U.S. Patent No. 2,944,906 to Spitzer discloses and claims a mayonnaise-like food product with a relatively low caloric content. The mayonnaise-like product has water as its principle component, and includes from 5.0 to 30.0% by weight edible oil, and a combination of a stiff and a soft gum to produce a product with the desired texture. Additionally, Spitzer requires the use of an egg yolk containing material as an emulsifying agent. The process disclosed in Spitzer for the production of the food product is a hot mix process to form a gel, which is then broken down into an oil in water emulsion of fine particle size.

U.S. Patent No. 3,023,104 to Battista discloses and claims reduced calorie food compositions, including a mayonnaise type salad dressing. The food compositions comprise a food material, and, as a non-nutritive agent, cellulose crystallite aggregates, which are a product of acid hydrolysis of cellulose. The cellulose crystallite aggregates are bland in taste and odor, have a smooth mouth feel, and have a physical appearance resembling starch. They are particularly well suited as a substitute for starch in baked products.

Rispoli et al., in U.S. Patent No. 4,308,294 disclose and claim an oil-free, oil-replacement composition which has an oily mouth feel, texture and lubricity, and which may be used to form a salad dressing product. The composition is formed by hydrating and whipping a protein and cellulose gum to form a protein phase; hydrating an acid stable modified starch and an acid to form an acid phase; subjecting the acid phase to heat to swell the starch; and mixing the protein phase and the acid phase.

In U.S. Patent No. 4,923,707 to Schoenberg, a method is a taught for producing a low oil mayonnaise product. The claimed process, and the product therefrom, contains an edible oil at a level of from 65% to 72% by weight, and includes a low D.E. corn syrup at a level of from 4 to 15% by weight. The product further contains water at a level of from 5 to 15% and egg yolk as the emulsifier in an amount of from 4 to 8% by weight. The mayonnaise is prepared by adding water and the egg yolk to the low D.E. corn syrup to form a premix, combining the premix with the oil and an edible acid to form a mayonnaise product, and processing the mayonnaise product under conditions of high shear.

From EP-A 0 301 440 it was known to use modified hemicellulose to replace part of the carbohydrates in products like bake goods and ice cream. Hemicelluloses are a class of compounds which are comprised of pentoses, like arabinose and xylose, and of hexoses like galactose and mannose. In contrast to cellulose, especially crystalline cellulose, they have a very reticulated structure.

US-PS 4 431 681 teaches the production of calorie reduced cake wherein the carbohydrates are replaced by a water binder, which is a gum and/or a bulking agent.

EP-A 0 380 225 discloses a fat substitute in the form of beads which have an inner core of a low caloric or non caloric material and an outer shell of fat.

EP-A 0 340 035 is directed to microfragmented ionic polysaccharide/protein complex dispersions which are suitable for use as fat substitute compositions in food products. The multi-step method for producing these microfragmented complexes is rather complicated. Fibers are formed from the protein and a gum or ionic polysaccaride component which are subjected to high shear to fragment the fibers and are comminuted to a maximum dimension of less than about 15 »m.

It has now been found that an acceptable low fat mayonnaise product can be made containing less than 10 % and preferable less than 5 % by weight edible oil.

### SUMMARY OF THE INVENTION

The present invention relates to a low fat or no fat mayonnaise product comprising less than 10 % by weight edible oil, water, egg white, 0.25 to 5 % by weight microcrystalline cellulose and polydextrose. With these ingredients a product is created which has the organoleptic and rheological attributes comparable to a conventional mayonnaise product. A no fat mayonnaise product is also taught which comprises the same ingredients as the low fat mayonnaise, but with no edible oil.

A process for the production of the mayonnaise products is also disclosed herein. Four premixes are prepared separately; one is a blend of dry ingredients and water, the second is the combination of microcrystalline cellulose and water, the third is a combination of gums, preferably xanthan gum, and water, and the fourth is a combination of water, egg white, whey protein concentrate, if present, and any added flavors or colors. The four premixes and any additional ingredients are mixed together to form a slurry, which is then subjected to a continuous cooking and cooling system. The cooked and cooled product is pumped through a milling device just prior to being sent through the filling apparatus for packaging.

### DETAILED DESCRIPTION

A low fat mayonnaise product is taught which comprises edible oil in an amount of less than 10% by weight. An alternate embodiment of this invention is a no fat mayonnaise product which does not include any edible oil. As previously stated in this application, the term "mayonnaise product" is being used herein to define a product which has the look and feel of a mayonnaise or spoonable salad dressing product to the general public, but which does not necessarily meet the current Standard of Identity of a mayonnaise or salad dressing product as promulgated by the USFDA.

The low fat mayonnaise product of the present invention uses a combination of a number of ingredients to replace the oil which is not present in the product. The main component of the low fat mayonnaise product is water, which is present in levels of from about 40 to about 90% by weight of the product, preferably from about 51 to about 85% by weight, with an optimal range of from about 60 to about 78% by weight.

In addition to the water, proteins, such as egg whites and whey protein concentrate, are present in the low fat mayonnaise product. The level of the protein must be carefully balanced in order to produce a product with an acceptable texture and flavor. Where both egg whites and whey protein concentrate are present, the egg whites should be present in an amount of from about 1.0 to about 20% by weight of the product, preferably about 1.0 to about 10% by weight, and the whey protein concentrate should be present in an amount of up to about 10% by weight of the final product. The preferred level of protein, i.e. the total amount of egg whites and whey protein concentrate, is at a level of from about 1 to about 12% by weight of the final product.

The use of proteins outside the ranges designated herein results in an unacceptable product. If the level of protein is too high, the resulting product becomes too stiff and rubbery or too thick.

Another important aspect of the low fat mayonnaise product is the inclusion of microcrystalline cellulose to control the consistency. The microcrystalline cellulose should be present in levels of from about 0.25 to about 5% of the product. At these levels, the microcrystalline cellulose imparts a thixotropic consistency and spreadability without any added gumminess, which is usually associated with the use of microcrystalline cellulose at higher levels.

It is common in commercial sources of microcrystalline cellulose, for a hydrocolloid such as sodium carboxymethyl cellulose or protective colloids such as gum to be present. The hydrocolloid is necessary to prevent aggregation or flocculation of the colloidal microcrystalline cellulose particles, and may therefore be present in the mayonnaise product.

To provide a low fat mayonnaise product with acceptable body, polydextrose is a recommended ingredient. In addition to the polydextrose, maltodextrin and a modified food starch may be included to result in a high quality, low fat mayonnaise product.

The optimal balance of the polydextrose, maltodextrin and modified food starch is important for providing a creamy, smooth body and lubricity which is associated with a conventional mayonnaise product. An improper balance of these three ingredients can result in a product which exhibits a pudding-like texture and is a cuttable instead of a spoonable mixture. If the modified food starch or the maltodextrin are used at levels which are too high, the resulting product will be too pasty and grainy. Too much polydextrose results in products with increased browning and the potential for off-flavor development.

If present, the polydextrose should be in an amount of from 1.0 to about 15% by weight, preferably at a level of from about 3.0 to about 8.0% by weight. The use of maltodextrin in the product has the added benefit of decreasing the breakdown rate of the product in the mouth, which is typical in a true mayonnaise product. The maltodextrin should be a low D.E., such as 10 D.E., and should be present in a level of from about 0.5 to about 7.5% by weight, preferably about 2.0 to about 5.0%. The D.E. designation is the amount of reducing sugar present on a dry basis, when calculated as dextrose. The modified food starch should be present at a level of from about 2.0 to about 10% by weight, preferably about 4.0 to about 6.0% by weight.

Additional components which may be added are an edible oil and an acidifying agent. In the low fat mayonnaise product, edible oil may be added at levels of up to about 10% by weight, preferably not more than about 2% by weight. Obviously, if a no fat mayonnaise product is desired, no edible oil will be added. The oils which can be added are those generally used in mayonnaise products, typically vegetable oils such as corn oil, soybean oil, sunflower oil and cottonseed oil. The acidifying agent can be any edible acid, such as citric acid, acetic acid or mixtures thereof. Generally, the acidifying agent is acetic acid which is present in the form of vinegar, or citric acid in the form of lemon or lime juices.

Further optional ingredients may be included, such as gums, flavors, colors and preservatives. Ingredients which are generally included in conventional mayonnaise formulas, such as salt, sugar and additional flavorings and spices and preservatives are also added to the low fat and no fat mayonnaise products.

A low fat salad dressing type product could also be produced using the basic teaching of this invention. In order to result in what would be known to the general public as a low fat spoonable salad dressing product, the amount of whey protein concentrate in the product would be at a level of no more than 8% by weight, the level of microcrystalline cellulose used would be at the lower end of the designated range, and there would be a change in the flavorings, such as an increase in the amount of sugar used.

The low fat or no fat mayonnaise products are made by the same procedure. The initial step in the process is the formulation of three or four premixes: a) a bulk dry ingredient blend premix; b) a microcrystalline cellulose premix; c) a gum and water premix; and d) a whey and/or egg premix. The bulk dry ingredient blend premix is defined as comprising any dry ingredients, except of course those specifically mentioned in one of the other premixes. Therefore, it would include polydextrose and any additional dry components such as modified food starch, maltodextrin, gums and water. The dry ingredients are preblended and then combined with water on a continuous basis.

Premix B comprises a blend of microcrystalline cellulose and water. The ingredients are combined in a powder/water dispersing device and the resulting mixture is then pumped directly and continuously through a milling device, preferably a colloid mill. The gap on the mill is preferably between about 0,15 mm to about 30 mm (about 6 to about 12 thousandths of an inch). The milling action is critical in order to form a uniform dispersion of the microcrystalline cellulose.

The third premix is the optional premix and is a combination of a protective colloid, such as xanthan gum, guar gum or combinations thereof and water. Preferably, this premix is a combination of xanthan gum and water and its purpose is to prevent flocculation and insure proper dispersion of the microcrystalline cellulose. When used, this premix is combined with Premix B after Premix B is subjected to milling; and prior to being mixed with the other premixes.

The fourth premix is comprised of liquid egg whites, salt, flavors, colors and whey protein concentrate, when appropriate. The ingredients are combined in a refrigerated tank which has stirring means.

The premixes are then added to a slurry make-up tank, with any additional ingredients such as sugar, oil, oil soluble flavors and colors and preservatives. The acidifying agent is also added directly to the slurry make-up tank, as the final ingredient. The ingredients are then blended for a period of at least 5 minutes. After the slurry is blended, it is pumped to a continuous cooking and cooling system. The slurry is heated via steam jacketed swept surface heat exchangers to a temperature in the range of from about 79,5°C (175°F) to about 93°C (200°F) where it is held for a period of from about 15 to about 75 seconds. The cooked slurry is then cooled to 21°C (70°F) in a series of swept surface heat exchangers. The cooled product is then held in a non-jacketed and non-agitated tank until required on the packaging line. The product is then pumped through a milling device, preferably a colloid mill prior to being routed to the filling apparatus.

An alternate process can be used when making a low fat mayonnaise product which would change the point of addition of some of the gums being added. Any gums which would be part of the bulk dry ingredient premix, can alternately be mixed with the oil, and the resulting mixture would be added directly to the slurry make-up tank. This does not apply to any gums which are used as protective colloids and form optional Premix C.

Incorporated in this procedure are a number of noteworthy features, such as the ability to cook the entire mixture, including the egg whites. This is contrary to a process for a true mayonnaise product where the egg portion is not cooked. It is preferable to cook the entire mixture in order to get a product with an acceptable texture. Other important features of this process are the milling steps, and the inclusion of Premix C when possible. As previously stated, the milling of the microcrystalline cellulose is necessary in order to form a uniform dispersion. The function of Premix C is important for good dispersion and prevention of subjecting the microcrystalline cellulose to acids or salts before it is protected by the gums. Therefore, when possible this additional premix should be formulated and combined with Premix B prior to incorporation in the slurry make-up tank.

The final milling step smooths out the product resulting in a visually smoother, less gritty appearance and a "fattier" texture. This final milling step is similar to a full fat mayonnaise process, but differs from a so-called light mayonnaise process which may not require milling.

The following examples further illustrate various features of the invention.

### EXAMPLE 1

A low fat mayonnaise product was produced by forming the following three premixes:

| Premix A | % by weight |
|---|---|
| Polydextrose | 10.00 |
| Modified food starch | 5.00 |
| gums | 0.30 |
| water | 30.00 |

| Premix B | |
|---|---|
| Avicel | 1.20 |
| water | 25.00 |

| Premix C | |
|---|---|
| Whey protein concentrate, dry basis | 4.00 |
| Egg white | 6.00 |
| flavors, colors | 2.00 |
| water | 5.50 |

Premix A was prepared by placing all the ingredients except water in a ribbon blender. After mixing, the water and blend were combined on a continuous basis in a powder/water dispersing apparatus. The premix was then pumped to a slurry tank. Premix B was formed by combining Avicel (a blend of microcrystalline cellulose and sodium carboxymethyl cellulose from FMC Corporation, Philadelphia, PA) and water in a powder/water dispersing device. The mixture was then pumped directly and continuously through a colloid mill at a rate of 151 to 189 ℓ (40 to 50 gallons) per minute, through a mill gap between 0,18 mm to 0,25 mm (7 and 10 thousandths of an inch). The mixture was then pumped to the slurry tank, simultaneous with Premix A.

Premix C was formed by combining all the ingredients batchwise in a refrigerated, well stirred tank, where they were held until required. They were then pumped to the slurry tank after Premixes A and B had begun to be added to said slurry tank.

The remaining ingredients, 3.00% sugar, additional flavors and preservatives, and 2.00% vegetable oil were added directly to the slurry tank. The 6.0% vinegar was added to the slurry tank last. The slurry was then mixed for a period of about 10 minutes. Thereafter, the slurry was pumped to a holding tank and from there to a continuous cooking and cooling system. The slurry was heated via steam jacketed swept surface heat exchangers from ambient temperatures to 93°C (200°F). It was then held at this temperature for 30 - 40 seconds in an insulated holding tube. The product was then cooled from 93°C to 21°C (200 to 70° F) in a series of swept surface heat exchangers, cooled first by chilled water, then by a standard refrigerant. The cooked and cooled product was then held in a non jacketed and non agitated tank until it was required at the packaging line. From this tank, the product was pumped through a colloid mill (gap between 0,25 mm and 0,76 mm (10 and 30 thousandths of an inch)) and then to the required filling apparatus.

The low fat mayonnaise product which resulted exhibited acceptable texture and taste qualities.

### EXAMPLE 2

A low fat mayonnaise product was made following the process in Example 1 but which further comprised a low D.E. maltodextrin in Premix A. The three premixes were made up as follows:

| Premix A | % by weight |
|---|---|
| Polydextrose | 6.00 |
| Modified food starch | 6.00 |
| Maltodextrin (15 D.E.) | 1.00 |
| gums | 0.30 |
| water | 25.00 |

| Premix B | |
|---|---|
| Avicel | 1.25 |
| water | 24.75 |

| Premix C | |
|---|---|
| Whey protein concentrate, dry basis | 5.00 |
| Egg white | 11.00 |
| flavors, colors | 2.00 |
| water | 2.00 |

The remaining ingredients were 5.50% sugar, 2.00% vegetable oil and 5.0% vinegar, as well as additional flavors and preservatives.

The resulting low fat mayonnaise product was judged to have acceptable organoleptic qualities.

### EXAMPLE 3

The process of Example 1 was followed but a no fat mayonnaise product was produced. Premix C contained no whey protein concentrate and no edible oil was added. The total amount of water increased by about 4.0%, with a slight (less than 0.5%) increase in egg white content. The resulting no fat mayonnaise product exhibited acceptable texture and taste properties.

### EXAMPLE 4

A low fat salad dressing product was made following the process set out in Example 1 but with the following ingredients.

| Premix A | Salad Dressing |
|---|---|
| Polydextrose | 9.5 |
| Modified Food Starch | 5.0 |
| Gums | 0.3 |
| Water | 30.0 |

| Premix B | |
|---|---|
| Avicel | 0.5 |
| Water | 25.0 |

| Premix C | |
|---|---|
| Whey Protein Concentrate (Dry Base) | 6.0 |
| Egg White | 4.0 |
| Flavor, Colors | 2.2 |
| Water | 5.0 |

| Additional Ingredients | |
|---|---|
| Vinegar | 5.0 |
| Sucrose | 5.5 |
| Oil | 2.0 |

The resulting product was found to exhibit textual qualities similar to the low fat mayonnaise products, but with a taste more characteristic of a salad dressing product.

### EXAMPLE 5

A low fat mayonnaise product was made containing the following ingredients:

| Premix A | % by weight |
|---|---|
| modified food starch | 6.0 |
| Polydextrose | 5.0 |
| Maltodextrin (15 D.E.) | 3.0 |
| guar gum | 0.1 |
| water | 17.7 |

| Premix B | |
|---|---|
| Avicel | 0.5 |
| water | 27.0 |

| Premix C | |
|---|---|
| xanthan gum | 0.20 |
| water | 9.00 |

| Premix D | |
|---|---|
| Protein | 6.0 |
| flavors, colors | 4.0 |
| water | 11.0 |

| Additional Ingredients | |
|---|---|
| sugar | 4.0 |
| vinegar | 4.5 |
| oil | 2.0 |

The process of Example 1 was followed except that an additional premix, Premix C, was formulated. After milling Premix B, it is combined in a mixer with Premix C and then the combination is pumped to a slurry tank, simultaneous with Premix A.

The resultant low fat mayonnaise product exhibited good taste and texture qualities.

## Claims

1. A low fat or no fat mayonnaise product comprising less than 10 % by weight edible oil, water, egg white, 0.25 to 5 % by weight microcrystalline cellulose and polydextrose.

2. The mayonnaise product of claim 1 which comprises no fat.

3. The mayonnaise product of claim 1 wherein the egg white is present in an amount of from 1 to 20 % by weight.

4. The mayonnaise product of claim 3 which further comprises whey protein concentrate in an amount up to 10 % by weight.

5. The mayonnaise product of claim 1 or 2 which further comprises maltodextrin.

6. The mayonnaise product of claim 5 which comprises from 0.5 to 7.5 % maltodextrin.

7. The mayonnaise product of claim 1 or 2 which comprises from 1.0 to 15 % polydextrose.

8. The mayonnaise product of claim 1 or 2 which further comprises modified food starch.

9. The mayonnaise product of claim 8 which comprises from 2.0 to 10 % modified food starch.

10. The mayonnaise product of any of the preceding claims which comprises from 1.0 to 4.0 % added edible oil, from 40 to 90 % water, from 1.0 to 15 % egg white, from 0.5 to 4.0 % whey protein concentrate, from 0.2 to 3.5 % microcrystalline cellulose, from 2.0 to 5.0 maltodextrin, from 2.0 to 6.0 % modified food starch, and from 2.0 to 10 % polydextrose.

11. The mayonnaise product of claim 10 which further comprises flavorings, colors, and preservatives.

12. The mayonnaise product of any of the preceding claims which further comprises an acidifying agent.

13. The mayonnaise product of claim 1 which is a low fat salad dressing.

14. A process for the production of the low fat or no fat mayonnaise product of any of claims 1 to 13 which comprises forming three premixes:
a) dry ingredients and water;
b) microcrystalline cellulose and water; and
c) egg white and water;
combining the premixes a, b, and c and additional components in a mixing tank to form a slurry; mixing for a period of at least 5 minutes; heating the slurry to a temperature of 79.5°C (175°F) to 93°C (200°F) for a period of 15 to 75 seconds; cooling the slurry to about 21°C (70°F) and then pumping the slurry through a milling device.

15. The process of claim 14 wherein premix b is pumped through a milling device prior to being combined with premixes a and c.

16. The process of claim 14 or 15 wherein the mill is a colloid mill.

17. The process of claim 14 which further comprises premixing gums with vegetable oil and adding the resulting mixture directly to the mixing tank with premixes a, b and c to form a slurry.

18. The process of any of claims 14 to 17 wherein premix c further comprises whey protein concentrate.

19. The process of claim 14 wherein a fourth premix
d) colloid gum and water
is formed and the slurry is formed by combining premixes b and d to form Premix e, and then combining premixes a, c and e in a mixing tank.

## Patentansprüche

1. Mayonnaiseprodukt mit geringem Fettgehalt oder ohne Fett umfassend weniger als 10 Gew.-% eßbares Öl, Wasser, Eiweiß, 0,25 bis 5 Gew.-% mikrokristalline Cellulose und Polydextrose.

2. Mayonnaiseprodukt nach Anspruch 1, das kein Fett enthält.

3. Mayonnaiseprodukt nach Anspruch 1, worin das Eiweiß in einer Menge von 1 bis 20 Gew.-% vorhanden ist.

4. Mayonnaiseprodukt nach Anspruch 3, das weiterhin Molkeprotein-Konzentrat in einer Menge von bis zu 10 Gew.-% enthält.

5. Mayonnaiseprodukt nach Anspruch 1 oder 2, das weiterhin Maltodextrin enthält.

6. Mayonnaiseprodukt nach Anspruch 5, das 0,5 bis 7,5 % Maltodextrin enthält.

7. Mayonnaiseprodukt nach Anspruch 1 oder 2, das 1,0 bis 15 % Polydextrose enthält.

8. Mayonnaiseprodukt nach Anspruch 1 oder 2, das weiterhin modifizierte Nahrungsmittelstärke enthält.

9. Mayonnaiseprodukt nach Anspruch 8, das 2,0 bis 10 % modifizierte Nahrungsmittelstärke enthält.

10. Mayonnaiseprodukt nach einem der vorhergehenden Ansprüche, das 1,0 bis 4,0 % zugegebenes eßbares Öl, 40 bis 90 % Wasser, 1,0 bis 15 % Eiweiß, 0,5 bis 4,0 % Molkeprotein-Konzentrat, 0,2 bis 3,5 % mikrokristalline Cellulose, 2,0 bis 5,0 % Maltodextrin, 2,0 bis 6,0 % modifizierte Nahrungsmittelstärke und 2,0 bis 10 % Polydextrose umfaßt.

11. Mayonnaiseprodukt nach Anspruch 10, das weiter Aromastoffe, Farbstoffe und Konservierungsmittel enthält.

12. Mayonnaiseprodukt nach einem der vorhergehenden Ansprüche, das weiterhin ein Säuerungsmittel enthält.

13. Mayonnaiseprodukt nach Anspruch 1, das ein Salatdressing mit geringem Fettgehalt ist.

14. Verfahren zur Herstellung des Mayonnaiseproduktes mit geringem Fettgehalt oder keinem Fettgehalt nach einem der Ansprüche 1 bis 13, das umfaßt, daß man drei Vormischungen bildet:
a) trockene Inhaltstoffe und Wasser;
b) mikrokristalline Cellulose und Wasser und
c) Eiweiß und Wasser;
die Vormischungen a, b und c und zusätzliche Komponenten in einem Mischtank vereinigt unter Bildung einer Aufschlämmung; über einen Zeitraum von mindestens 5 Minuten vermischt; die Aufschlämmung auf eine Temperatur von 79,5°C (175°F) bis 93°C (200°F) über einen Zeitraum von 15 bis 75 Sekunden erhitzt; die Aufschlämmung auf etwa 21°C (70°F) kühlt und dann die Aufschlämmung durch eine Mahlvorrichtung pumpt.

15. Verfahren nach Anspruch 14, worin Vormischung b durch eine Mahlvorrichtung gempumt wird, bevor sie mit den Vormischungen a und c vereinigt wird.

16. Verfahren nach Anspruch 14 oder 15, worin die Mühle eine Kolloidmühle ist.

17. Verfahren nach Anspruch 14, das weiterhin umfaßt, daß man die Gummis mit eßbarem Öl vormischt und die entstehende Mischung direkt in den Mischtank mit den Vormischungen a, b und c unter Bildung einer Aufschlämmung gibt.

18. Verfahren nach einem der Ansprüche 14 bis 17, worin die Vormischung c weiterhin Molkeprotein-Konzentrat enthält.

19. Verfahren nach Anspruch 14, worin eine vierte Vormischung aus
d) Kolloidgummi und Wasser
gebildet wird und die Aufschlämmung gebildet wird, indem die Vormischungen b und d unter Bildung einer Vormischung e vereinigt werden und dann die Vormischungen a, c und e in einem Mischtank vereinigt werden.

## Revendications

1. Produit de mayonnaise à faible teneur en graisse ou non gras, comprenant moins de 10% en poids d'huile comestible, de l'eau, du blanc d'oeuf, de 0,25 à 5% en poids de cellulose microcristalline et de la polydextrose.

2. Produit de mayonnaise selon la revendication 1, qui ne comprend pas de gras.

3. Produit de mayonnaise selon la revendication 1, dans lequel le blanc d'oeuf est présent en une quantité de 1 à 20% en poids.

4. Produit de mayonnaise selon la revendication 3, qui comprend en outre du concentrat protéinique de petit-lait en une quantité allant jusqu'à 10% en poids.

5. Produit de mayonnaise selon la revendication 1 ou 2, qui comprend en outre de la maltodextrine.

6. Produit de mayonnaise selon la revendication 5, qui comprend de 0,5 à 7,5% de maltodextrine.

7. Produit de mayonnaise selon la revendication 1 ou 2, qui comprend de 1,0 à 15% de polydextrose.

8. Produit de mayonnaise selon la revendication 1 ou 2, qui comprend en outre de l'amidon alimentaire modifie.

9. Produit de mayonnaise selon la revendication 8, qui comprend de 2,0 à 10% d'amidon alimentaire modifié.

10. Produit de mayonnaise selon l'une quelconque des revendications précédentes, qui comprend de 1,0 à 4,0% d'huile comestible ajoutée, de 40 à 90% d'eau, de 1% à 15% de blanc d'oeuf, de 0,5 à 4,0% de concentration protéinique de petit-lait, de 0,2 à 3,5% de cellulose microcristalline, de 2,0 à 5,0% de maltodextrine, de 2,0 à 6,0% d'amidon alimentaire modifié et de 2,0 à 10% de polydextrose.

11. Produit de mayonnaise selon la revendication 10, qui comprend en outre des parfums, des colorants et des conservants.

12. Produit de mayonnaise selon l'une quelconque des revendications précédentes, qui comprend en outre un agent acidifiant.

13. Produit de mayonnaise selon la revendication 1, à savoir un assaisonnement à faible teneur en graisse.

14. Procédé pour la préparation du produit de mayonnaise à faible teneur en graisse ou non gras selon l'une quelconque des revendications 1 à 13, qui comprend la préparation de trois prémélanges :
a) des ingrédients secs et de l'eau;
b) de la cellulose microcristalline et de l'eau; et
c) du blanc d'oeuf et de l'eau;
le fait de combiner les prémélanges a, b et c et des composants supplémentaires dans une cuve de mélange pour obtenir une bouillie; le fait de mélanger pendant un laps de temps d'au moins 5 minutes; le fait de chauffer la bouillie à une température de 79,5°C (175°F) à 93°C (200°F) pendant un laps de temps de 15 à 75 secondes; le fait de refroidir la bouillie à environ 21°C (70°F) et ensuite, le fait de pomper la bouillie à travers un dispositif de broyage.

15. Procédé selon la revendication 14, dans lequel le prémélange b est pompé à travers un dispositif de broyage avant d'être combiné avec les prémélanges a et c.

16. Procédé selon la revendication 14 ou 15, dans lequel le broyeur est un moulin des colloïdes.

17. Procédé selon la revendication 14, qui comprend en outre le fait de prémélanger des gommes avec de l'huile végétale et le fait d'ajouter le mélange résultant directement dans la cuve de mélange avec les prémélanges a, b et c pour obtenir une bouillie.

18. Procédé selon l'une quelconque des revendications 14 à 17, dans lequel le prémélange c comprend, en outre, un concentrat protéinique de petit-lait.

19. Procédé selon la revendication 14, dans lequel on prépare un quatrième prémélange
d) de gomme colloïdale et d'eau,
et on forme la bouillie en combinant les prémélanges b et d pour obtenir un prémélange e, et en combinant ensuite les prémélanges a, c et e dans une cuve de mélange.
